# EUROPÄISCHE PATENTSCHRIFT

(11) **EP 0 696 835 B1**
(45) Veröffentlichungstag und Bekanntmachung des Hinweises auf die Patenterteilung: **05.02.1997**
(21) Anmeldenummer: 94112660.9
(22) Anmeldetag: 12.08.1994
(51) Int. Cl.: H02K 21/16, H02K 21/18, H02K 1/27

(54) **Pumpenantrieb für ein Haushaltsgerät mit einem aus einem Wechselstromnetz gespeisten Einphasen-Synchronmotor**
Pump-drive for a domestic appliance with a one-phase synchronous motor fed by an AC network
Entraînement de pompe avec un moteur synchrone monophasé alimenté par un réseau de courant alternatif

(43) Veröffentlichungstag der Anmeldung: 14.02.1996
(73) Patentinhaber: SIEMENS AKTIENGESELLSCHAFT, 80333 München (DE)
(72) Erfinder: Altenbernd, Gerald, Dr. Ing., D-30455 Hannover (DE); Wähner, Ludwig, Dipl.-Ing., D-97234 Reichenberg (DE)

(56) Entgegenhaltungen:
- DE-A- 1 043 488
- GB-A- 2 271 672
- PATENT ABSTRACTS OF JAPAN vol. 6, no. 77 (E-106) (955) 14. Mai 1982 & JP-A-57 013 955

## Beschreibung

Die Erfindung bezieht sich auf einen Pumpenantrieb für ein Haushaltsgerät mit einem aus einem Wechselstromnetz gespeisten Einphasen-Synchronmotor gemäß Anspruch 1.

Aus der EP-B1-0 358 806 ist ein selbstanlaufender Einphasen-Synchronmotor mit einem zumindest zweipoligen, permanentmagnetisch erregten Rotor bekannt, der für einen Selbstanlauf eine über den Bohrungsumfang veränderliche Luftspaltweite derart aufweist, daß im Einschaltzeitpunkt die Statorfeldachse um einen bestimmten Winkel gegenüber der Rotorfeldachse verschoben ist; dazu werden insbesondere, z.B. durch die DE-PS-34 03 041 bekannte, Stufenpole vorgesehen, die zur Folge haben, daß der permanentmagnetisch erregte Rotor sich vor dem Einschalten der Statorwicklung in eine solche gegenüber bei symmetrischen Polbögen unterschiedliche Stellung verdreht, daß der magnetische Widerstand minimal ist. Beim Einschalten der Statorerregung übt dann das Statorfeld auf den permanentmagnetisch erregten Rotor ein Anlauf-Drehmoment solange aus, bis der Winkel zwischen den beiden Feldachsen wieder gegen Null geht.

Es wurde herausgefunden, daß aus einem Wechselstromnetz gespeiste Einphasen-Synchronmotoren im stationären Lauf aufgrund gegeneinander umlaufender Strombeläge und Felder mit unerwünschten zeitlich schwankenden Pendelmomenten doppelter Netzfrequenz behaftet sind, die zu insbesondere bei Einsatz für Antriebe in Haushaltsgeräten unerwünschten Geräuschen führen.

Solche Geräusche können in überraschender Weise gemäß vorliegender Erfindung in fertigungs- und montagetechnisch einfacher Weise dadurch verhindert werden, daß der permanentmagnetisch erregte Rotorteil zusätzlich mit einem elektrisch leitenden Rotorteil versehen ist, in dem die unerwünschten Rotor-Pendelmomente doppelter Netzfrequenz bei betriebsmäßiger Drehung des Rotors im stationären Zustand abdämpfende Wirbelströme entstehen; dementsprechend ist das Volumen bzw. die Leitfähigkeit des elektrisch leitenden Rotorteils zu bemessen, der vorzugsweise aus paramagnetischem bzw. diamagnetischem Material, wie Kupfer, Aluminium oder dergleichen, mit zeitlich unabhängiger Permeabilität, gegebenenfalls auch mit einem ferromagnetischen Anteil besteht.

Die elektrisch leitenden Rotorteile können in besonders einfacher und wirksamer Weise durch den permanentmagnetisch erregten Rotorteil übergreifende Hülsen bzw. Hülsenteile gebildet werden, wobei diese Hülsen bzw. Hülsenteile vorzugsweise aus paramagnetischem bzw. diamagnetischem Vollmaterial bestehen oder in weiterer fertigungstechnischer Aufwandsminderung aus Kunststoff-Spritzgußteilen mit eingelagerten elektrisch leitenden Partikeln gebildet werden.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: den radialen Querschnitt durch einen aufgrund einer Stufenpolbildung selbstanlaufenden Einphasen-Synchronmotor mit symmetrischem Blechschnitt des Statorblechpaketes;
- FIG 2: den radialen Querschnitt durch einen aufgrund einer Stufenpolbildung selbst anlaufenden Einphasen-Synchronmotor mit unsymmetrischem Blechschnitt des Statorblechpaketes;
- FIG 3: den permanentmagnetisch erregten Rotorteil gemäß FIG 1,2 mit zwei außen umgebenden elektrisch leitenden Hülsenteilen;
- FIG 4: den permanentmagnetisch erregten Rotorteil gemäß FIG 1,2 mit einer außen umgebenden elektrisch leitenden Hülse und einer dazu konzentrischen inneren elektrisch leitenden Hülse;
- FIG 5: einen permanentmagnetisch erregten Rotorteil mit schichtweise zwischen permanentmagnetisch erregten Rotorteilen angeordneten elektrisch leitenden Schichten;
- FIG 6: einen permanentmagnetisch erregten Rotorteil mit einer außen umgebenden elektrisch leitenden Hülse aus Kunststoff mit eingelagerten elektrisch leitenden Partikeln;
- FIG 7: einen permanentmagnetisch erregten Rotorteil mit direkt eingelagerten elektrisch leitenden Partikeln;
- FIG 8: einen permanentmagnetisch erregten Rotorteil mit zwei außen umgebenden Hülsenteilen aus elektrisch leitendem ferromagnetischen Material und zwischenliegenden Kurzschlußsicherungen durch magnetische Sättigungsbereiche;
- FIG 9: einen permanentmagnetisch erregten Rotorteil mit zwei außen umgebenden Hülsenteilen aus elektrisch leitendem ferromagnetischen Material und zwischenliegenden Kurzschlußsicherungen durch Unterbrechungen;
- FIG 10: einen permanentmagnetisch erregten Rotorteil mit an seiner Außenumfangsfläche angeordneten, axial verlaufenden elektrisch leitenden Stegen und diese stirnseitig verbindenden elektrisch leitenden Ringen;
- FIG 11: einen permanentmagnetisch erregten Rotorteil mit über seinen Umfang angeordneten elektrisch leitenden, axialen Stegen.

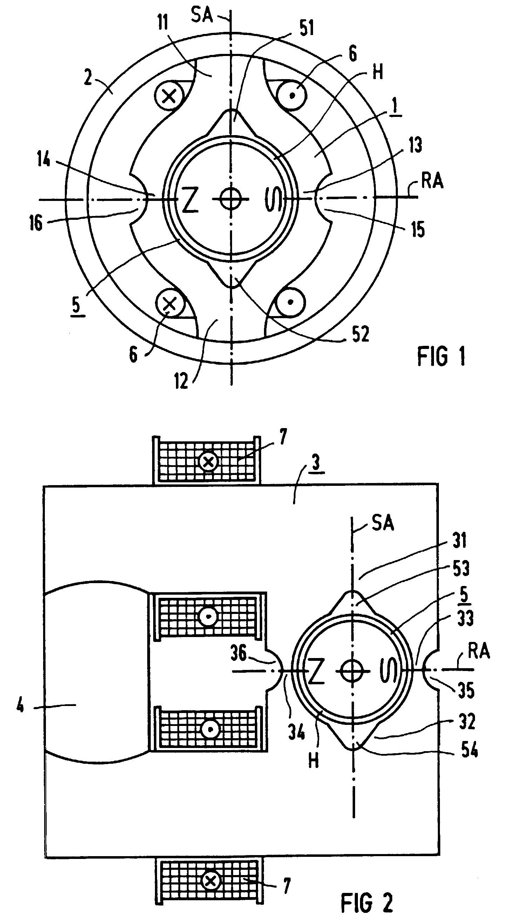

FIG 1 zeigt in einem radialen Querschnitt einen permanentmagnetisch erregten Einphasen-Synchronmotor mit symmetrischem Blechschnitt des Statorblechpaketes. Das Statorblechpaket setzt sich zusammen aus einem Pol-Blechpaketteil 1 mit einem ersten Einzelpol 11 und einem zweiten Einzelpol 12, deren Polspitzen an den freien Enden der Polhörner im Sinne eines geschlossenen Blechschnittes miteinander verbunden sind, und einem ringförmigen Rückschlußjoch-Blechpaketteil 2, das über die radial freien Enden der zuvor mit aufgesteckten Statorwicklungsspulen 6,6 versehenen Polhörnern der Pole 11,12 im Preßsitz überstülpbar ist.

Das Pol-Blechpaketteil 1 weist in Richtung der durch die Erregung der Statorwicklungsspulen 6,6 gegebenen Statorfeldachse SA Luftspaltaufweitungen 51,52 des Luftspaltes 5 und in Richtung der zur Statorfeldachse SA um 90° el verschobenen Rotorfeldachse RA in Rotorruhestellung magnetische Blechpaketengstellen 13,14 auf. Die magnetischen Blechpaketengstellen 13,14 werden ebenso wie die Luftspaltaufweitungen 51,52 durch außenseitige bzw. luftspaltseitige Ausstanzungen des Pol-Blechpaketteils 1 erreicht; die außenrandseitigen Ausstanzungen des Pol-Blechpaketteils 1 zur Erzielung der gewünschten Engstellen 13,14 tragen die Bezugszeichen 15,16.

FIG 2 zeigt einen Einphasen-Synchronmotor mit unsymmetrischem Blechschnitt des Statorblechpaketes. Das Statorblechpaket besteht aus einem U-förmigen Pol-Blechpaketteil 3 und einem zwischen die freien Enden der Schenkel des Pol-Blechpaketteils 3 nach dem Überstecken von Statorwicklungsspulen 7,7 über die Seitenschenkel des Pol-Blechpaketteils 3 im Preßsitz eindrückbaren Rückschlußjoch-Blechpaketteil 4. In ähnlicher Weise wie in FIG 1 sind auch beim Ausführungsbeispiel gemäß FIG 2 in Richtung der durch als Erregung der Statorwicklungsspulen 7,7 im Grundschenkel des U-förmigem Pol-Blechpaketteils 3 gegebenen Statorfeldachse SA Luftspaltaufweitungen 53,54 und in der dazu senkrecht liegenden Rotorfeldachse RA in Rotorruhestellung Blechpaketengstellen 33,34 durch außenrandseitige Ausstanzungen 35,36 im Pol-Blechpaketteil 3 vorgesehen.

Der einen Nordpol N und einen Südpol S enthaltende permanentmagnetisch erregte Rotor ist in FIG 1 und FIG 2 in der Stellung eingezeichnet, die der Rotor aufgrund der vorgesehenen Luftspaltaufweitungen 51,52 bzw. 53,54 bei nicht angeschlossenen Statorwicklungsspulen 6,6 bzw.7,7, d.h. noch nicht vorhandener Statorerregung einnimmt.

Beim Einschalten des Einphasen-Synchronmotors, d.h. beim Anlegen einer Speisespannung an die Statorwicklungsspulen 6,6 bzw.7,7 wird sich aufgrund der vorgesehenen Blechpaketengstellen 13,14 bzw.33,34 ein Statorfeldverlauf einstellen, der im wesentlichen in Richtung der Statorfeldachse SA im Pol-Blechpaketteil 1 bzw.3 verläuft, aus dem Polbogen der Polhörner in den jeweiligen Luftspalt aus- bzw. eintritt und den permanenterregten Rotor N,S durchfließt. Ein Statorerregungsfluß über die Blechpaketengstellen kann dabei vollständig dadurch vermieden werden, daß die Ausstanzungen 15,16 bzw.35,36 und damit die Querschnittsflächen der Blechpaketengstellen 13,14 bzw.33,34 derart dimensioniert sind, daß aufgrund der alleinigen Rotorerregung zwar noch keine Sättigung im Bereich der Blechpaketengstellen eintritt, jedoch diese Sättigung beim Einschalten der Statorwicklungsspulen und damit vorhandenen Statorfeld erreicht ist.

Um bei einem zuvor beispielhaft beschriebenen einsträngigen permanentmagnetisch erregten Sychronmotor im stationären Lauf auftretende unerwünschte Pendelschwingungen mit doppelter Netzfrequenz auf einfache Weise verhindern zu können, sind erfindungsgemäß im permanentmagnetisch erregten Rotorteil elektrisch leitende Rotorteile vorgesehen, die mittels Wirbelstrombildung die unerwünschten Rotor-Pendelbewegungen abdämpfen; in FIG 1,2 ist schematisch als elektrisch leitender Rotorteil eine den äußeren Umfang des permanentmagnetisch erregten Rotorteils N,S umgebene Hülse H aus elektrisch leitendem Material vorgesehen.

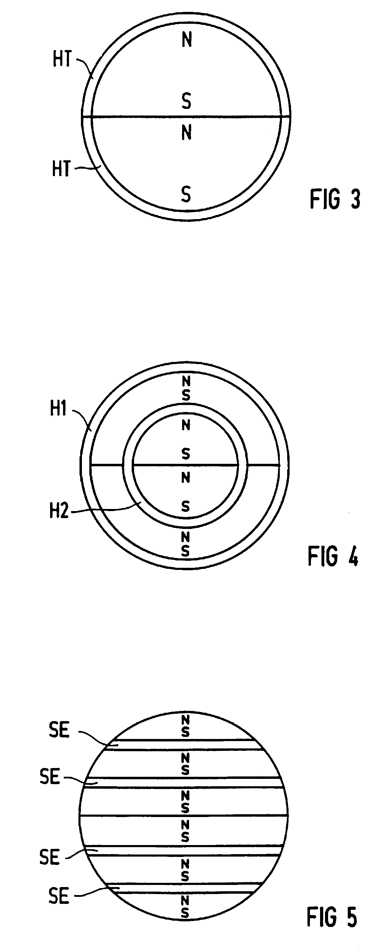

Weitere vorteilhafte Ausbildungen eines erfindungsgemäß vorgesehenen elektrisch leitenden Rotorteils sind in den weiteren Ausführungsbeispielen gemäß FIG 3 bis 11 erläutert.

FIG 3 zeigt einen zweischaligen permanentmagnetisch erregten Rotorteil N,S;N,S mit jeweils einem konzentrisch außen umgebenden halbkreisförmigen elektrisch leitenden Hülsenteil HT;HT aus vorzugsweise diamagnetischem bzw. paramagnetischem Vollmaterial. FIG 4 zeigt als elektrisch leitende Rotorteile zwei zueinander konzentrische, im radialen Abstand angeordnete Hülsen H1;H2 mit zwischengelagerten permanentmagnetisch erregten halbringförmigen bzw. halbkugelschalenförmigen Rotorteilen.

FIG 5 zeigt einen schichtweise aufgebauten Rotor mit elektrisch leitenden Zwischenschichten SE zwischen ebenfalls schichtweise aufgebauten permanentmagnetisch erregten Rotorteilen NS.

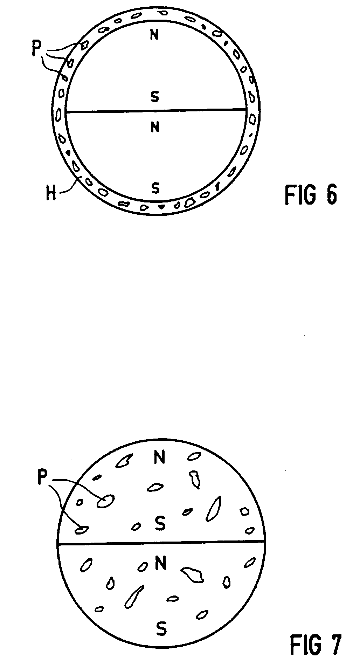

FIG 6 zeigt einen aus zwei Halbschalen zusammengesetzten permanentmagnetisch erregten Rotorteil NS;NS und eine außen umgebene konzentrische, aus Kunststoff gespritzte Hülse H mit eingelagertem elektrisch leitenden Partikeln P als elektrisch leitender Rotorteil. FIG 7 zeigt einen Rotor aus zwei halbschalenförmigen permanentmagnetisch erregten Rotorteilen N,S;N,S mit direkt eingelagerten elektrisch leitenden Partikeln P.

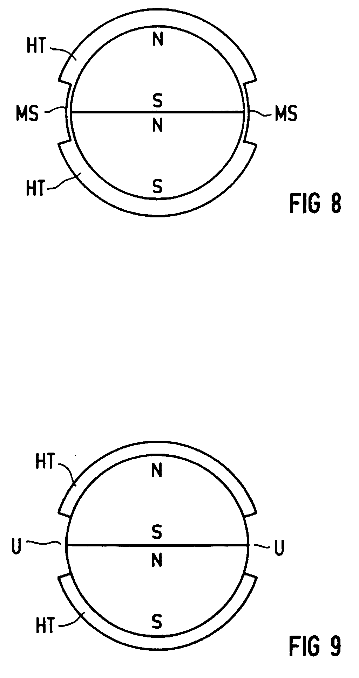

FIG 8,9 zeigen jeweils einen Rotor mit zwei halbschalenförmigen permanentmagnetisch erregten Rotorteilen N,S;N,S und jeweils außen übergreifenden elektrisch leitenden Hülsenteilen HT;HT aus ferromagnetischem Material, wobei zur Kurzschlußsicherung zwischen den beiden Hülsenteilen ein Bereich magnetischer Sättigung MS gemäß FIG 8 oder eine Unterbrechung U gemäß FIG 9 vorgesehen ist.

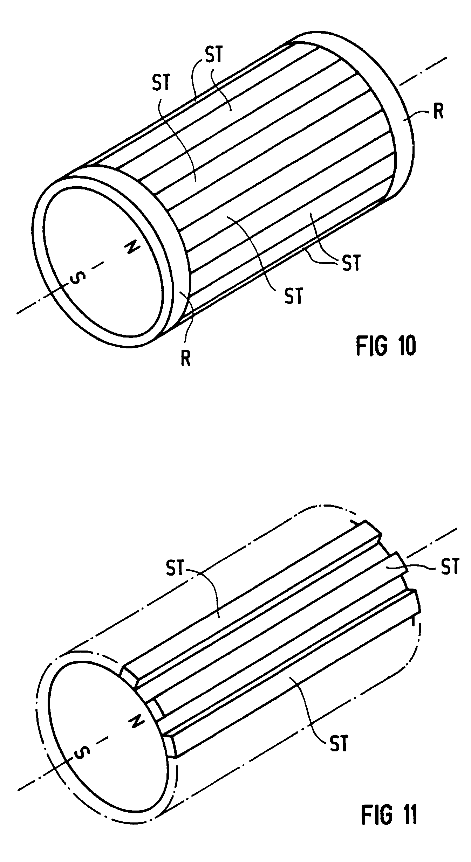

FIG 10 zeigt in perspektivischer Darstellung einen permanentmagnetisch erregten Rotorteil N,S mit an seinem Außenumfang angeordneten, axial verlaufenden elektrisch leitenden Stegen ST, die stirnseitig durch ebenfalls elektrisch leitende Ringe R verbunden sind; FIG 11 zeigt eine ähnliche Anordnung wie FIG 10 mit am Außenumfang des permanentmagnetisch erregten Rotorteils N,S aufliegenden elektrisch leitenden Stegen ST, die sich ohne endseitige elektrisch leitende Ringe axial über die Länge des permanentmagnetisch erregten Rotorteils N,S erstrecken.

## Patentansprüche

1. Pumpenantrieb in einem Haushaltsgerät mit einem aus einem Wechselstromnetz gespeisten Einphasen-Synchronmotor mit einem zumindest zweipoligen permanentmagnetisch erregten Rotorteil (N,S) mit einem unstetigen Luftspalt zur Bildung eines Anlaufmoments sowie mit zumindest einem, insbesondere schichtartigen, elektrisch leitenden Rotorteil (H;HT;SE;P;ST) zur Abdampfung von Rotor-Pendelbewegungen doppelter Netzfrequenz mittels Wirbelstrombildung in dem elektrisch leitenden Rotorteil.

2. Pumpenantrieb nach Anspruch 1 mit einem elektrisch leitenden Rotorteil in Form von zumindest einer einen permanentmagnetisch erregten Rotorteil (N,S) konzentrisch umgebenden Hülse (H1;H2).

3. Pumpenantrieb nach Anspruch 1 mit mehreren zueinander konzentrischen, jeweils zumindest einen permanentmagnetisch erregten Rotorteil (N,S) umgebenden Hülsen (H1;H2).

4. Pumpenantrieb nach Anspruch 1 und/oder Anspruch 2 mit aus, insbesondere zwei, Hülsenteilen (HT,HT) zusammengesetzten Hülsen.

5. Pumpenantrieb nach zumindest einem der Ansprüche 1-4 mit mehreren jeweils ein Polpaar (N,S) enthaltenden permanentmagnetisch erregten Rotorteilen (N,S;N,S) konzentrisch umgebenden Hülsen (H1;H2).

6. Pumpenantrieb nach zumindest einem der Ansprüche 1-5 mit Hülsen- bzw. Hülsenteilen bzw. permanentmagnetisch erregten Rotorteilen (N,S) aus einem Kunststoff-Träger und darin eingelagerten elektrisch leitenden wirbelstrombildenden Partikeln (P).

7. Pumpenantrieb nach Anspruch 1 mit jeweils schichtweise, insbesondere axial verlaufend, zwischen permanentmagnetisch erregten Rotorteilen (N,S) angeordneten elektrisch leitenden wirbelstrombildenden Zwischenschichten (SE).

8. Pumpenantrieb nach Anspruch 1 mit jeweils stabartig, insbesondere axial verlaufend, an bzw. in den permanetmagnetisch erregten Rotorteilen (N,S) liegenden und gegebenenfalls untereinander, insbesondere durch endseitige Ringe (R), untereinander elektrisch verbundenen, elektrisch leitenden wirbelstrombildenden Stegen (ST).

9. Pumpenantrieb nach zumindest einem der Ansprüche 1-8 mit elektrisch leitenden wirbelstrombildenden Hülsenteilen (HT) aus paramagnetischem bzw. diamagnetischem Material.

10. Pumpenantrieb nach zumindest einem der Ansprüche 1-9 mit elektrisch leitenden wirbelstrombildenden Hülsenteilen (HT) aus ferromagnetischem Material und jeweils durch Unterbrechung (U) bzw. magnetische Sättigung (MS) gebildeten, magnetischen Kurzschluß-Sicherungen zwischen den einzelnen permanentmagnetisch erregten Rotorteilen (N,S) zugeordneten wirbelstrombildenden Hülsenteilen (HT).

## Claims

1. Pump drive in a domestic appliance, having a single-phase synchronous motor fed from an AC system, having an at least two-pole rotor part (N, S) excited by permanent magnet, having a variable air gap for forming a starting torque, and having at least one, in particular laminated, electrically conducting rotor part (H; HT; SE; P; ST) for damping rotor oscillations of double system frequency by means of eddy-current formation in the electrically conducting rotor part.

2. Pump drive according to Claim 1, having an electrically conducting rotor part in the form of at least one sleeve (H1; H2) concentrically surrounding a rotor part (N, S) excited by permanent magnet.

3. Pump drive according to Claim 1, having a plurality of mutually concentric sleeves (H1; H2) respectively surrounding at least one rotor part (N, S) excited by permanent magnet.

4. Pump drive according to Claim 1 and/or Claim 2, having sleeves assembled from, in particular two, sleeve parts (HT, HT).

5. Pump drive according to at least one of Claims 1-4, having a plurality of sleeves (H1; H2) concentrically surrounding rotor parts (N, S; N, S) respectively containing one pole pair (N, S) and excited by permanent magnet.

6. Pump drive according to at least one of Claims 1-5, having sleeves or sleeve parts and rotor parts (N, S), which are excited by permanent magnet and comprise a plastic carrier and electrically conducting particles (P) which are incorporated therein and form eddy currents.

7. Pump drive according to Claim 1, having electrically conducting interlayers (SE) which form eddy currents and are arranged in each case in a laminated, in particular axially extending, fashion between rotor parts (N, S) excited by permanent magnet.

8. Pump drive according to Claim 1, having electrically conducting webs (ST) which in each case extend like a bar, in particular axially, form eddy currents, are situated on or in the rotor parts (N, S) excited by permanent magnet, and are optionally electrically connected to one another, in particular are electrically connected to one another by end rings (R).

9. Pump drive according to at least one of Claims 1-8, having electrically conducting sleeve parts (HT) which form eddy currents and are made from paramagnetic or diamagnetic material.

10. Pump drive according to at least one of Claims 1-9, having electrically conducting sleeve parts (HT) which form eddy currents and are made from ferromagnetic material, and having sleeve parts (HT) which are formed in each case by an interruption (U) or magnetic saturation (MS) and are assigned to magnetic back-up fuses between the individual rotor parts (N, S) excited by permanent magnet.

## Revendications

1. Entraînement de pompe dans un appareil électroménager, comportant un moteur synchrone monophasé alimenté à partir d'un réseau à courant alternatif, ayant une partie rotorique (N, S) excitée par aimant permanent, au moins à deux pôles, ayant un entrefer qui n'est pas constant pour former un couple de démarrage, ainsi qu'ayant au moins une partie rotorique (H ; HT ; SE ; P; ST) électriquement conductrice, notamment en forme de couches, pour amortir, au moyen d'une formation de courants de Foucault dans la partie rotorique électriquement conductrice, les mouvements pendulaires du rotor, ayant deux fois la fréquence du réseau.

2. Entraînement de pompe selon la revendication 1, comportant une partie rotorique électriquement conductrice, sous la forme d'au moins une gaine (H1 ; H2) entourant, de manière concentrique, une partie rotorique (N, S) excitée par aimant permanent.

3. Entraînement de pompe selon la revendication 1, comportant plusieurs gaines (H1 ; H2), concentriques les unes par rapport aux autres et entourant respectivement au moins une partie rotorique (N, S) excitée par aimant permanent.

4. Entraînement de pompe selon la revendication 1 et/ou la revendication 2, comportant des gaines constituées par des parties de gaine (HT, HT) et notamment par deux parties.

5. Entraînement de pompe selon au moins l'une des revendications 1 à 4, comportant plusieurs gaines (H1 ; H2) entourant, de manière concentrique, des parties rotoriques (N, S ; N, S) excitées par aimant permanent et comportant respectivement une paire de pôles (N, S).

6. Entraînement de pompe selon au moins l'une des revendications 1 à 5, comportant des gaines, ou des parties de gaine ou des parties rotoriques (N, S) excitées par aimant permanent, consistant en une matrice en matière plastique dans laquelle sont incorporées des particules (P) électriquement conductrices et engendrant des courants de Foucault.

7. Entraînement de pompe selon la revendication 1, comportant des couches intermédiaires (SE), électriquement conductrices et engendrant des courants de Foucault, placées par couche, notamment en s'étendant dans le sens axial, entre des parties rotoriques (N, S) excitées par aimant permanent.

8. Entraînement de pompe selon la revendication 1, comportant des barrettes (ST), électriquement conductrices et engendrant des courants de Foucault, respectivement en forme de baguette et s'étendant notamment axialement contre, ou bien dans, les parties rotoriques (N, S) excitées par aimant permanent, ces barrettes étant, le cas échéant, reliées électriquement les unes aux autres, notamment par des anneaux (R) au niveau des extrémités.

9. Engendrant de pompe selon au moins l'une des revendications 1 à 8, comportant des parties de gaine (HT), électriquement conductrices et engendrant des courants de Foucault, faites en un matériau paramagnétique ou bien diamagnétique.

10. Engendrant de pompe selon au moins l'une des revendications 1 à 9, comportant des parties de gaine (HT), électriquement conductrices et engendrant des courants de Foucault, faites en un matériau ferromagnétique, et respectivement des protections contre les courts-circuits, formées par une interruption (U) ou bien par une saturation magnétique (MS), entre les parties de gaine (HT) associés, engendrant de courants de Foucault et placées entre les parties rotoriques (N, S) excitées par aimant permanent.
